# EUROPEAN PATENT APPLICATION

(11) **EP 1 047 011 A2**
(43) Date of publication of application: **25.10.2000**
(21) Application number: 00201425.6
(22) Date of filing: 20.04.2000
(51) Int. Cl.: G06K 7/00

(54) **Electronic RF identification systems**

(30) Priority: 21.04.1999 ZA 9902847
(71) Applicant: Supersensor (Proprietary) Limited, Midrand 1685, Gauteng (ZA)
(72) Inventor: Kruger, Johan David, Fourways Gardens, Witkoppen 2068 (ZA); Turner, Christopher Gorden Gervase, President Park, Halfway House (ZA)
(74) Representative: Wharton, Peter Robert

(57) **Abstract**

An electronic radio frequency identification system 10 comprises an enclosure 26 defining a reading volume 28. An interrogation signal transmitter 16 transmits an interrogation signal 18 into the volume at a power level higher than a regulated maximum permitted effective radiated power level. The signal is used to energize and read a plurality of passive transponders 22.4 to 22.8 located in the volume. The enclosure serves to attenuate the interrogation signal such that transmitted power externally of the enclosure is not higher than the maximum permitted effective radiated power.

## Description

### INTRODUCTION AND BACKGROUND

THIS invention relates to electronic radio frequency (RF) identification systems. It more particularly relates to such a system including an interrogation signal transmitter, a plurality of transponders and a reader for response data transmitted by the transponders.

Systems of the aforementioned kind are well known in the art. It is also well known, especially in systems including passive transponders, that the higher the transmitted power, the larger the range of the system is and the more effective the system operates even at distances falling well within the range of the system. The reason for this is that the passive transponders derive their power from the interrogation signal.

In some countries or jurisdictions the maximum effective radiated power of the transmitter of the systems described hereinbefore, is regulated by official regulations to be relatively high, for example 4 Watts. This regulated maximum effective power is sufficient for many applications of the system to operate satisfactorily. However, in some jurisdictions the maximum effective radiated power is regulated not to exceed 500mW. It will be appreciated that such a low permitted maximum power output would impinge negatively on a number of applications for systems of the aforementioned kind.

### OBJECT OF THE INVENTION

Accordingly it is an object of the present invention to provide a radio frequency identification system, a method of operating such a system and a method of manufacturing such a system with which the applicant believes at least some of the aforementioned problems may at least be alleviated.

### SUMMARY OF THE INVENTION

According to the invention there is provided a method of operating an electronic identification system, the method comprising the steps of:
- transmitting an interrogation signal at a power level higher than a maximum permitted effective radiated power level;
- causing transponders in a reading volume to transmit response signals and reading the response signals; and
- utilizing an attenuating structure to attenuate the interrogation signal in a region beyond the volume and thereby ensuring that the radiated power beyond the structure is not higher than the maximum permitted effective radiated power level.

The maximum permitted effective radiated power is normally regulated by regulation in each country. It may differ from country to country and also from one application within a country to another application.

The signal may be attenuated by absorbing the signal and/or containing the signal within the volume.

The signal may be absorbed by anechoic RF absorbing material forming part of the structure. In addition or alternatively, the signal may be contained by a shield forming part of the structure.

Also included within the scope of the present invention is a method of manufacturing an RF identification system comprising the steps of:
- providing an interrogation signal transmitter for transmitting an interrogation signal to transponders, the transmitter being capable of transmitting an interrogation signal at a power level higher than a maximum permitted effective radiated power level;
- locating the transmitter in an enclosure defining a reading volume therein; and
- constructing the enclosure such that the enclosure attenuates the transmitted signal so that the radiated power beyond the enclosure is not higher than a maximum permitted effective radiated power.

Yet further included within the scope of the present invention, is an electronic identification system comprising;
- an enclosure defining a reading volume;
- an interrogation signal transmitting means for transmitting an interrogation signal into the volume at a power level higher than a maximum permitted effective radiated power level;
- a plurality of transponders located in the volume;
- the transponders being operative to respond to the interrogation signal with response signals which are being read by a reader; and
- the enclosure being operative to attenuate the interrogation signal such that transmitted power beyond the enclosure is not higher than the maximum permitted effective radiated power.

The walls of the enclosure may include RF energy absorbing material. Alternatively or in addition the enclosure may comprise a shield for the signal to contain the signal within the volume.

The enclosure may be provided about a conveyer belt for carrying the transponders.

The enclosure may provide an inlet region for the belt and an outlet region therefrom for the belt. The inlet and outlet regions may include RF energy absorbing material.

### BRIEF DESCRIPTION OF THE ACCOMPANYING DIAGRAMS

The invention will now further be described, by way of example only, with reference to the accompanying diagrams, wherein:

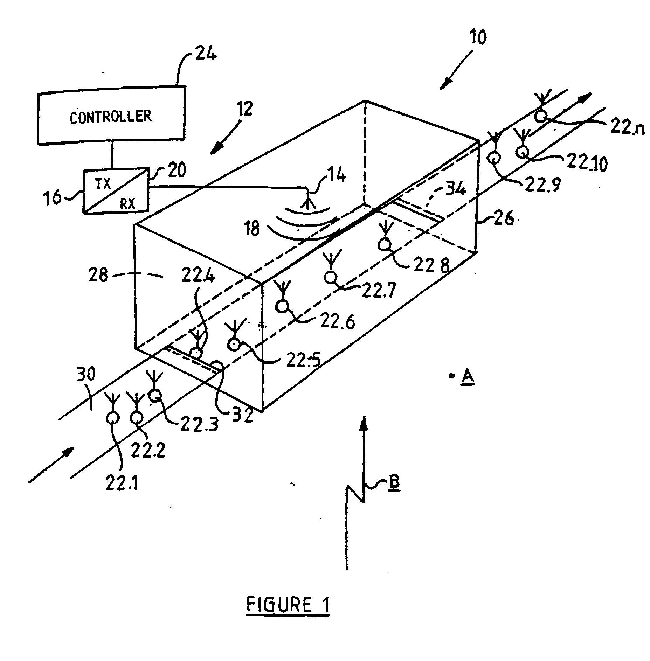

- figure 1: is a diagrammatic illustration of an electronic radio frequency (RF) identification system according to the invention; and
- figure 2: is a transverse cross section through an enclosure according to the invention for a system according to the invention.

### DESCRIPTION OF A PREFERRED EMBODIMENT OF THE INVENTION

The system 10 according to the invention includes a reader/interrogator 12 including a transmitter 16 for transmitting via antenna 14 an interrogation signal 18 having a nominal operating frequency f_{c}. The transmitter transmits the signal 18 at a power level substantially higher than a maximum permitted effective radiated power level, which is normally regulated by regulatory authorities in a particular jurisdiction. For example in the UK, the maximum permitted effective radiated power for systems of the kind in question is as low as 500mW. The disadvantages of this low effective radiated power are discussed in the introduction of this specification. The reader further includes a receiver 20 for receiving response signals from passive transponders 22.1 to 22.n energized by the signal 18. The reader 12 still further includes a controller 24 for controlling operation of the reader.

The system 10 includes an enclosure 26 defining a reading volume 28 therein. A conveyor 30 carrying articles to which the transponders 22.1 to 22.n are attached, extends through the enclosure between an inlet region 32 to the enclosure and an outlet region 34 from the enclosure.

The enclosure serves to attenuate the transmitter signal 18 so that the radiated power at point A beyond the enclosure is not more than the 500mW permitted effective radiated power. The walls of the enclosure may include a shield for containing the signal within the volume, and/or RF absorbing material to absorb the energy in the signal. At the inlet and outlet regions 32, 34 there is also provided such absorbing material.

In use, the transmitter 16 emits an energizing or interrogation signal at a power level substantially higher than the maximum permitted effective radiated power. The signal energizes the transponders 22.4 to 22.8 in the volume 28 and they respond in known manner by back-scatter modulating the signal with respective response data stored in respective memory arrangements associated with respective circuitry of the transponders. The response signals are received by receiver 20 and the response data are read by the reader 12. On the basis of the data read, the articles carrying the transponders are identified and/or counted, as is well known in the art.

Since the power transmitted is relatively high, the performance and the volume that is covered are improved. On the other hand, the enclosure 26 ensures that the radiated power beyond the enclosure is not higher than the permitted level.

A concomitant advantage of the system according to the invention is that the enclosure 26 also attenuates stray and extraneous signals B.

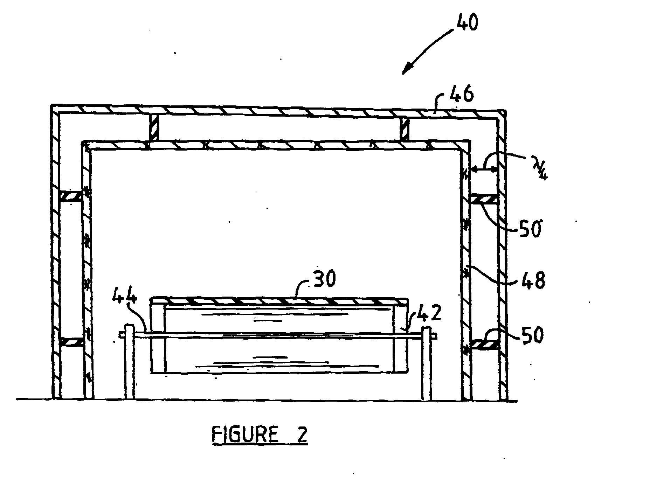

A transverse cross section through an elongate enclosure 40 is shown in figure 2. The conveyor belt 30 is supported by a roller 42 mounted on an axle 44. The enclosure 40 comprises an outer electricity conductive metal wall 46 acting as a shield. The enclosure further comprise any inner wall 48 of carbon loaded paper, for example. The inner wall is separated from the outer wall by a distance λ_{c}/4 (wherein λ_{c} is the wavelength of the energizing signal 18 having a nominal operating frequency f_{c}) by insulating spacers 50. The inner wall has a resistance of substantially 377 Ω/m², which is the impedance of free space. The signal 18 transmitted by the transmitter 16 located in the enclosure propagates outwardly through wall 48 and is reflected inwardly by the outer wall 46 towards the inner wall 48, where it is absorbed.

It will be appreciated that there are many variations in detail on the system and method according to the invention without departing from the scope and spirit of the appended claims.

## Claims

1. A method of operating an electronic identification system, the method comprising the steps of:
- transmitting an interrogation signal at a power level higher than a maximum permitted effective radiated power level;
- causing transponders in a reading volume to transmit response signals and reading the response signals; and
- utilizing an attenuating structure to attenuate the interrogation signal in a region beyond the volume and thereby ensuring that the radiated power beyond the structure is not higher than the maximum permitted effective radiated power level.

2. A method as claimed in claim 1 wherein the signal is attenuated by absorbing the signal.

3. A method as claimed in claim 2 wherein the signal is absorbed by anechoic RF absorbing material forming part of the structure.

4. A method as claimed in claim 1 wherein the signal is attenuated by containing the signal within the volume.

5. A method as claimed in claim 4 wherein the signal is contained by a shield forming part of the structure.

6. A method of manufacturing a RF identification system comprising the steps of:
- providing an interrogation signal transmitter for transmitting an interrogation signal to transponders, the transmitter being capable of transmitting an interrogation signal at a power level higher than a maximum permitted effective radiated power level;
- locating the transmitter in an enclosure defining a reading volume therein; and
- constructing the enclosure such that the enclosure attenuates the transmitted signal, so that the radiated power beyond the enclosure is not higher than a maximum permitted effective radiated power.

7. An electronic identification system comprising:
- an enclosure defining a reading volume;
- an interrogation signal transmitting means for transmitting an interrogation signal into the volume at a power level higher than a maximum permitted effective radiated power level;
- a plurality of transponders located in the volume;
- the transponders being operative to respond to the interrogation signal with response signals which are being read by a reader; and
- the enclosure being operative to attenuate the interrogation signal such that transmitted power beyond the enclosure is not higher than the maximum permitted effective radiated power.

8. A system as claimed in claim 7 wherein the walls of the enclosure comprises RF energy absorbing material to absorb the interrogation signal.

9. A system as claimed in claim 7 or claim 8 wherein the enclosure includes a shield for the signal to contain the signal within the volume.

10. A system as claimed in any one of claims 7 to 9 wherein the enclosure comprises an outer wall of an electricity conductive material and an inner wall having an impedance of substantially 377 Ω/m² spaced from the outer wall a distance equal to a quarter of a wavelength of the interrogation signal.

11. A system as claimed in claim 6 wherein the enclosure is provided about a conveyer belt for carrying the transponders.

12. A system as claimed in claim 10 wherein the enclosure defines an inlet region for the belt and an outlet therefrom for the belt and which regions comprise RF energy absorbing material.

13. An enclosure for use with an electronic radio frequency identification system comprising an outer wall of an electricity conductive material and an inner wall having an impedance of substantially 377 Ω/m² spaced from the outer wall a distance equal to a quarter of a wavelength of an interrogation signal transmitted by an interrogator of the identification system.
